# EUROPEAN PATENT SPECIFICATION

(11) **EP 0 712 883 B1**
(45) Date of publication and mention of the grant of the patent: **20.03.2002**
(21) Application number: 95117530.6
(22) Date of filing: 07.11.1995
(51) Int. Cl.: C08J 9/00, C08J 9/12, C08B 30/12, C08L 3/00

(54) **Expanded starch-based shaped products and the method of preparation thereof**
Formteile aus expandierte Stärke und Verfahren zu deren Herstellung
Produits formés à base d'amidon expansé et méthode pour leur préparation

(30) Priority: 10.11.1994 US 338059; 30.10.1995 US 537415
(43) Date of publication of application: 22.05.1996
(73) Proprietor: National Starch and Chemical Investment Holding Corporation, Wilmington, Delaware 19809 (US)
(72) Inventor: Altieri, Paul A., Belle Mead, New Jersey 08502 (US); Tormey, Beth C., Frenchtown, New Jersey 08825 (US); Rose, Richard R., Amelia Island, Florida 32034 (US)
(74) Representative: Hagemann, Heinrich, Dr.rer.nat., Dipl.-Chem.

(56) References cited:
- EP-A- 0 544 234
- WO-A-91/18048
- WO-A-93/08014
- US-A- 4 863 655

## Description

This invention relates to expanded or foamed shaped starch products which are made by extrusion under select conditions using starch feed materials having a defined particle size.

Starch, a readily available known biodegradable material, has been used to prepare foamed, film and other shaped products for different purposes including selected packaging applications. Some of these starch products and their uses are described in U.S.-A-5,035,930 and 5,043,196.

Extrusion is a well known technique, widely used in forming plastic materials into various foamed and expanded products. More recently, the extrusion of starch into expanded articles has shown increased interest as noted in the aforementioned '930 and '196 U.S. patents which disclose the extrusion of high amylose starch into low density packaging materials. Other disclosures of forming starch products by extrusion can be found in U.S.-A-5,248,702 directed to packaging fillers and in U.S.-A-5,314,754 involved with the formation of shaped products such as films, rods and sheets. Another disclosure, EP 0 544 234 shows the general process of starch extrusion. However, despite this background of extrusion as well as the known capability of using starch in forming expanded products, the ability to produce different large snaped or structured starch products such as flexible sheets and rigid boards or planks, has not been easily attained.

While much attention has been directed to finding different starch compositions including combinations with various synthetic polymers and additives such as plasticizers, only limited consideration has been given to the nature of the extrusion process itself. Extrusion and expansion of starch not only is different from plastics, but even varies in many respects when large structured products are formed as compared to the formation of smaller products such as cylinders, tubes, rope like products and narrow sheets. In order to produce large shaped products, the need to utilize extruder dies of different shapes and configurations is apparent. However, the ability to make large expanded starch products is complicated by the fact that most of the properties in the smaller formed products have to be maintained or improved while several other properties such as flexibility and/or rigidity have to be satisfied. The process of forming large structured foam products not only involves a change in the die configuration and size but has to overcome problems or variations caused by increased threshold throughput or feed rates and changes in processing pressure and product cell structure.

Accordingly, there is a need to define a method for producing structured shaped starch products, having the necessary properties such as flexibility or rigidity, and the products produced by this method.

Rolled paper goods, such as toweling, tissue and wrapping papers are typically held on a wound paper core. The paper core provides structure and acts as a support for the rolled or wound paper. Emphasis on environmental concerns has made it highly desirable to use products which are either biodegradable and readily disposable or recyclable. While paper is repulpable and recyclable, the products using paper cores generally contain an adhesive or glue making it difficult to process in a repulping operation.

The biodegradable, starch-containing packaging materials known in the art are typically prepared to be water-resistant rather than water-dispersible. Furthermore, not much attention has been directed to the preparation and production of structured starch articles such as expanded core products, which require demanding properties including dimensional stability and structural strength. Thus, there remains a need for biodegradable products which are also water soluble and water dispersible and further meet the physical and structural requirements demanded in paper core applications.

The present invention provides a structured biodegradable shaped product comprising an expanded, closed cell starch product wherein the product is formed by extruding starch which has a particle size of from 400 to 1500 µm, the product having a bulk density of from 32.04 to 256.3 kg/m³ (2 to 16 Ib/ft³), a compressibility of from 100 to 800 g/cm² and a resiliency of at least 20%.

The present invention also provides a biodegradable, water dispersible shaped core product having good dimensional stability and structural strength properties comprising an expanded, closed cell starch product wherein the product is formed by extruding starch which has a selected particle size of from 400 to 1500 µm (microns), whereby the product has a bulk density of from 32.04 to 256.3 kg/ₘ³ (2 to 16 lb/ft³), a compressibility of from 100 to 800 g/cm² and a resiliency of at least 20%.

The ability to provide large shaped or structured starch products for use in packaging or other applications and biodegradable, water dispersible shaped starch core products for use in the winding or rolling and storage of paper goods are the main objectives of this invention. The term "structured" product as used herein refers to products having relatively large configurations or shapes such as wide and/or thick sheets and planks. Typically this would include sheets, planks or board having thicknesses of up to several inches or more and more particularly up to 10.16 cm (4") and varying widths of up to 60.96 cm (24") to 121.92 cm (48") or more. Sheets which are usually flexible, typically have thicknesses of up to 0.635 cm (¼") while planks or boards, which are usually rigid or semi-rigid typically have thicknesses of 0.635 cm ¼" to 2.54 cm (1").

The term "core" product as used herein refers to products having relatively large configurations or shapes and includes tubes or inserts, spools and supports used for rolled paper goods such as tissues and towels and may even be used for rolling and holding other fabric materials. The core may be solid or tubular and the dimensions can vary depending on the particular use and operation in which it is being used. Generally dimensions of up to 7.62 cm (3.0 inches) or more, inner and outer diameters and lengths of up to 609.6 cm (240") or more may be used. In the tissue application area, typical dimensions include inner diameter of about 3.81 cm (1.5") and outer diameter of about 4.45 cm (1.75") with a length of about 304.8 cm (120"). These dimensions as noted, depend on use and will vary, for example in the paper area depending on the winding and cutting equipment in which it is used.

The formation of shaped starch products by extrusion is becoming of more interest and has been described many times in the recent literature as noted previously. Most of the disclosures have been involved with providing shaped fillers and random or smaller packaging materials such as discrete loosefill products, sometimes called peanuts, or very small sheets. The ability to extend this processing concept to the formation of bigger or larger starch shaped products, such as cores for paper products, has not been a simple or direct extension of the known technology. This is because the chemical nature of starch is quite different from the various plastic and synthetic materials, such as styrene and polyethylene, that have been extruded into shaped products for many years. Additionally, while the rheology of starch extrusion to form smaller loosefill type products is similar in some respects to the extrusion of larger structured products, it is also different or lacking in other properties or aspects. Along these lines it is noted that the extrusion of starch to produce the structured foamed products generally requires dies with large openings or increased cross sectional areas. This means higher throughput or feed rates to satisfy pressure, fill rates and other rheological properties needed to produce products with suitable properties. One significant variation is that of cell structure in the resulting product.

In order to provide suitable extrusion properties and particularly the needed high feed rates and threshold throughput in forming desired structured and core starch products it has been found that the feed starch particle size is an important factor. A significantly large and defined particle size has been found specially advantageous in providing desirable extrusion processing conditions and resulting product properties. The useful particle size is large and in a defined range of from 400 to 1500 µm (microns) and more particularly from 800 to 1200 µm (microns). When using starch feed material with this defined particle size, the extrusion processing conditions including feed rate and pressure, plus needed cell structure in the formed product were more readily attainable to provide the structured and core products of suitable characteristics.

In order to obtain the starch feed material having the necessary particle size in accordance with this invention, a method known as compact granulating, commonly referred to as chilsonating, may be used. Other methods to attain desired starch particle size may also be used provided substantially all of the starch feed material is within the prescribed size range.

Another feature which improves processing and the properties of the resulting structured starch products is the addition of a nucleating agent or salt to the starting starch feed material. This is especially helpful when dies of increased and large open areas or cross section are used and particularly improves the cell structures of the expanded product. Various nucleating agents or salts may be used in this capacity including any inorganic, water soluble salt or mixtures thereof and especially an alkali metal or alkaline earth metal salt such as sodium sulfate and sodium chloride. Other nucleating agents such as microtalc can be used but the alkali metal or alkaline earth metal salts are preferred. The amount of nucleating agent used will depend on particular processing conditions and desired extruded product dimensions with at least 1%, more particularly from 1 to 8% and preferably from 1% to 6% by weight of nucleating agent, based on the weight of starch in the feed composition, being used. When making flexible sheets it has been found desirable to use 2 to 5% by weight of nucleating agent and with rigid or semi-rigid planks it has been found desirable to use from 1 to 3% by weight of nucleating agent. In general, the higher amounts of nucleating agent have been found very beneficial when using large die openings needed to produce the structured starch products. It is further noted that the nucleating agent or salt can be added to the feed starch or in certain circumstances may be present as residual salt or ash content in the already prepared starch. The combination of defined starch particle size and the addition of nucleating agent, as defined herein, has been found to be especially advantageous in producing the structured foam starch products in accordance with this invention.

The starting starch material useful in this invention may be any of several starches, native or converted. Such starches include those derived from any plant source including corn, potato, wheat, sago, tapioca, waxy maize, sorghum and high amylose starch, i.e., starch having at least 40% and more particularly at least 65% by weight of amylose content, such as high amylose corn, etc. Starch flours may also be used as a starch source. Also included are the conversion products derived from any of the former bases including, for example, dextrin prepared by hydrolytic actions of acid and/or heat; oxidized starches prepared by treatment with oxidants such as sodium hypochlorite; fluidity or thin boiling starches prepared by enzyme conversion or mild acid hydrolysis; and derivatized and crosslinked starches.

Modified starches are particularly useful in this invention. By modified it is meant that the starch can be derivatized or modified by typical processes known in the art, e.g., esterification, etherification, oxidation, acid hydrolysis, crosslinking and enzyme conversion. Typically, modified starches include esters, such as the acetate and half-esters of dicarboxylic acids, particularly the alkenylsuccinic acids; ethers, such as the hydroxyethyl and hydroxypropyl starches and starches reacted with hydrophobic cationic epoxides: starches oxidized with hypochlorite; starches reacted with crosslinking agents such as phosphorus oxychloride, epichlorohydrin, and phosphate derivatives prepared by reaction with sodium or potassium orthophosphate or tripolyphosphate and combinations thereof. These and other conventional modifications of starch are described in publications such as "Starch: Chemistry and Technology", Second Edition, edited by Roy L. Whistler, et al., Chapter X; Starch Derivations: Production and Uses by M. W. Rutenberg, et al., Academic Press, Inc. 1984.

One modification of the starches used in this invention that is especially useful is the etherification with alkylene oxides, particularly those containing 2 to 6, preferably 2 to 4 carbon atoms. Ethylene oxide, propylene oxide and butylene oxide are exemplary compounds that are useful in etherifying the starting starch materials, with propylene oxide being especially preferred. Varying amounts of such compounds may be used depending on the desired properties and economics. Generally, up to 15% or more and preferably, up to about 10%, by weight, based on the weight of starch will be used. Another modification of the starches that is especially useful in this invention is a starch ester prepared from an organic acid anhydride having a hydrophobic group such as dodecenyl succinic anhydride. More particularly, the hydrophobic group is a hydrocarbon group such as alkyl, akenyl, aralkyl or aralkenyl having 2 to 20 carbons, preferably 5 to 18 and most preferably 8 to 12 carbons. Generally, the starch will be treated with 2 to 60% and preferably 5 to 20% by weight of the anhydride, based on the weight of the starch.

In a preferred embodiment, the starch material is a high amylose starch, i.e., one containing at least 40%, by weight, and more preferably at least 65%, by weight, of amylose. Further preferred are the high amylose starches modified by etherification with alkylene oxides, as described above.

Blends of two or more of the starch starting materials may be used as well as additive or synthetic compounds to improve properties such as water resistance, strength, flexibility, color, etc. Compounds such as polyvinyl alcohol, ethylene vinyl alcohol, polyvinyl acetate, poly (ethylene vinyl acetate), monoglycerides, styrene acrylate resins are typical additives which may be used. These additives may be used in any amount that will effectively satisfy the desired property, provided the extrusion of the starch and the overall properties of the expanded product are suitable. Generally, up to 50% by weight of such additives, and preferably up to 10% by weight, may be used.

The expanded shaped products of this invention are prepared using an extrusion process. The apparatus used in carrying out the extrusion process may be any screw type extruder. While the use of a single or twin screw extruder may be used, it is preferred to use a twin-screw extruder. Such extruders will typically have rotating screws in a horizontal cylindrical barrel with an entry port mounted over one end and a shaping die mounted at the discharge end. When twin screws are used, they may be co-rotating and intermeshing or non-intermeshing. Each screw will comprise a helical flight or threaded sections and typically will have a relatively deep feed section followed by a tapered transition section and a comparatively shallow constant-depth meter section. The motor driven screws, generally fit snugly into the cylinder or barrel to allow mixing, heating and shearing of the material as it passes through the extruder.

Control of the temperature along the length of the extruder barrel is important and is accomplished in zones along the length of the screw. Heat exchange means, typically a passage such as a channel, chamber or bore located in the barrel wall, for circulating a heated media such as oil, or an electrical heater such as calrod or coil type heaters, are often used. Additionally, heat exchange means may also be placed in or along the shaft of the screw device.

Variations in any of the elements used in the extruder may be made as desired in accordance with conventional design practices. A further description of extrusion and typical design variations can be found in "Encyclopedia of Polymer Science and Engineering", Vol. 6, 1986, pp. 571 to 631.

In carrying out the extrusion process, temperatures in the extruder will vary depending on the particular material, desired properties and application. They can generally range from 100 to 250°C and preferably when extruding high amylose starch will range from 150 to 210°C. The total moisture content of the starch in the extruder, i.e., moisture present in the inlet fed starch plus water added during processing, will be 25% or less by weight, based on the weight of starch. More particularly, the total moisture content of the starch will range from 10 to 25% and preferably from 15 to 21%.

Various dies and die configurations may be used in the extruder and extrusion process with an annular or tubular die being one suitable type. Upon exiting the extruder, the expanded starch can be cut to a desired length using techniques known in the art. This may involve thin slitting or cutting using a knife or other cutting means and passing over a mandrel and then further conveying through rollers or calendering rolls. In the case of sheets they may be compressed to a degree as they pass through the rollers to help provide the flexibility and softness desired.

The product emerging from the extruder and processing operations is an expanded, closed cell material of relatively low to intermediate density with other desirable properties depending on its intended use. In the case of structured products such as sheets and planks, this will include flexibility or rigidity as well as resilience and compressibility. The extruded core products need dimensional stability and structured strength as well as other properties that help it withstand the different environmental and operation conditions, such as high speed winding operations, to which it will be exposed. The product will also be biodegradable or substantially biodegradable depending on whether it comprises all starch or if it includes other components, the nature of such components. Biodegradability has become a desired feature of many products because of the environmental problems associated with waste disposal. The term "biodegradable" as used herein refers to the susceptibility of a substance to decomposition by living things (organisms/microorganisms) and/or natural environmental factors, e.g., the ability of compounds to be chemically broken down by bacteria, fungi, molds and yeast.

Besides biodegradability, the extruded core product desirably will be water soluble upon direct contact with water so it can be readily disposable.

The starch material that is processed through the extruder emerges as an expanded, foam material because of the nature of the material and formulation as well as the moisture content and general extruder operating conditions. This foamed product may be expanded by amounts of up to 16 times or more from its original size and will have a characteristic closed cell structure. The uniform, closed cell structure of the expanded product with its characteristic tiny bubble formation helps to give it desired properties such as flexibility or rigidity as well as resilience and compressibility. A close cell structure is defined as one having largely nonconnecting cells, as opposed to open cells which are largely interconnecting or defined as two or more cells interconnected by broken, punctured or missing cell walls. The tiny bubble formation generally results in a small cell size of typically 100 to 1200 µm (microns).

The bulk density of the product will be from 32.04 to 256.3 kg/m³ (2 to 16 lb/ft³) and preferably from 48.1 to 160.2 kg/m³ (3 to 10 lb/ft³); the resiliency will be at least 20%, preferably at least 50% and the compressibility will range from 100 to 800 and preferably from 200 to 600 g/cm² The bulk density can be determined by the volume deplacement method described by M. Hwang and K. Hayakawa in "Bulk Densities of Cookies Undergoing Commercial Baking Processes", Journal of Food Science, Vol. 45, 1980, pp. 1400-1407. This method is further described in U.S.-A-5,043,196. The resilience and compressibility were determined using a Stevens LFRA Texture Analyzer as also described in the aforesaid '196 patent. The disclosure of each of these methods is described in U.S.-A-No. 5,043,196.

The invention is further illustrated by the following examples with all parts and percentages given by weight and all temperatures in degrees Celsius unless otherwise noted.

### EXAMPLE I

Several starch samples were extruded into sheets using an APV MKII 65 mm extruder having an annular die. The first material extruded was high amylose corn starch (about 70% amylose), hydroxypropylated with about 7% of propylene oxide. The starch feed had particle size ranging from 840 to 1190 µm (microns), obtained using a compact granulation process. Typical extrusion processing conditions used for producing sheets of varying dimensions are shown in Table 1 below:

**TABLE 1**

| | A | B |
|---|---|---|
| Sheet Dimensions (approximate) | 43.18 cm (17") wide x 0.159 cm (1/16") thick | 30.48 cm (12") wide x 0.318 cm (1/8") thick |
| Feed Rate (lb/hr) | 619 | 655 |
| % Ash or Nucleating Agent (Na₂So₄) | 2.46 | 4.34 |
| Die Clearance (mm) | 1.1 | 1.1 |
| Die Cross Sectional Area (mm²⁾ | 152.8 | 152.5 |
| Temperature (at die) (°C) | 178 | 172 |
| Total Moisture (%) | 21.4 | 19.6 |

The sheets produced were further compressed after exiting the extruder through a calendering roll to provide sheets having suitable flexibility which could be wound into a roll and having other desired properties. Properties of a product made under conditions B and having a thickness of about 0.356 cm (0.140") and width of about 30.48 cm (12") included: bulk density 84.25 kg/m³ (5.26 lb/ft³), compressibility 138.0 g/cm² and resiliency 69.2%.

Sheets were also produced in the same manner using unmodified corn starch blended with 20% of polyvinyl alcohol, and high amylose (70%) starch acetate.

### EXAMPLE II

Sample starches similar to Example I were extruded into planks of varying dimensions using extrusion processing conditions shown in Table 2.

**TABLE 2**

| | A | B |
|---|---|---|
| Sheet Dimensions | 25.4 cm (10") wide 0.318 cm (⅛") thick | 15.24 cm (6") x 1.27 cm (½") thick |
| Feedrate (lb/hr.) | 748 | 833 |
| % Ash or Nucleating Agent (Na₂SO₄) | 1.33 | 1.66 |
| Die Clearance (mm) | 2.2 | 2.2 |
| Die Cross Sectional Area (mm²) | 193.8 | 193.8 |
| Temperature (at die) (°C) | 169 | 165 |
| Total Moisture (%) | 19.8 | 18.2 |

Planks were produced using high amylose starch (about 70% amylose), hydroxypropylated with about 7% propylene oxide and B process conditions shown above and having a thickness of about 1.02 cm (0.4") and width of about 15.24 cm (6"). These planks had suitable properties including rigidity, bulk density of 92.90 kg/m³ (5.8 lb/ft³). compressibility of 260 g/cm² and resilience of 66%. Some of the planks made in this manner were further fabricated by die or saw cutting and laminated together to form assembled planks of greater thickness.

### EXAMPLE III

Several starch samples were extruded into foamed cores using a Wemer and Pfleiderer twin screw co-rotating extruder, model ZSK 30 having a tubular die with a 5.08 cm (2") O.D. and 4.32 cm (1.7") I.D. The first material extruded was high amylose starch (Hylon VII, a high amylose corn starch product of National Starch and Chemical Company having about 70% amylose content by weight) hydroxypropylated with about 7% of propylene oxide. The starch feed had particle size ranging from about 840 to 1190 µm (microns) and was obtained using a compact granulation process. The feed contained about 2.5% by weight of microtalc as nucleating agent.

The extrusion processing conditions included total moisture content of 17.5%, a feed rate of 47.1 kg/hr (104 lb/hr), a screw speed of 500 rpm and temperature at the die of 180°C.

The foamed starch core product exited the extruder and was cut to a desired length. The extruded core products were closed cell starch foam products having suitable properties including dimensional stability, strength and flexibility for the intended use with tissue paper products. They also rapidly dispersed in the presence of water with moderate agitation.

### EXAMPLE IV

Several additional starch samples were extruded into foamed core products as in Example III. The feed materials included 1) hydroxypropylated high amylose starch as in Example III and 2.5% microtalc with the addition of 8% of polyvinyl alcohol, 2) a 50/50 blend of the hydroxypropylated high amylose starch as in Example III and a starch modified with dodecenyl succinic anhydride with 2.5% microtalc and 3) the hydroxypropylated high amylose starch as in Example III with 5.2% ash (Na₂SO₄).

All or the prepared products were closed cell starch foam products and had suitable properties needed for core products used in paper applications.

## Claims

1. A structured biodegradable shaped product comprising an expanded, closed cell starch product wherein the product is formed by extruding starch which has a particle size of from 400 to 1500 µm, the product having a bulk density of from 32.04 to 256.3 kg/m³ (2 to 16 lb/ft³), a compressibility of from 100 to 800 g/cm² and a resiliency of at least 20%.

2. The product of Claim 1 wherein the starch is selected from the group consisting of corn, potato, wheat, tapioca, waxy maize and high amylose corn.

3. The product of Claim 2 wherein the starch is a modified starch.

4. The product of Claim 1 wherein the starch has amylose content of at least 40% by weight based on the weight of the starch.

5. The product of Claim 1 wherein the starch contains from 1 to 8% by weight of a nucleating agent.

6. The product of Claim 2 wherein the starch has amylose content of at least 40% by weight based on the weight of starch and is modified with up to 15% by weight of alkylene oxide containing 2 to 6 carbon atoms.

7. The product of Claim 6 wherein the product is a flexible sheet and wherein the starch contains 2 to 5% by weight of a nucleating agent.

8. The product of Claim 6 wherein the product is a rigid plank and the starch contains 1 to 3% by weight of a nucleating agent.

9. The product of Claim 1 wherein the product is a biodegradable, water dispersible shaped core product.

10. The product of Claim 9 where the starch is selected from the group consisting of corn, potato, wheat, tapioca, waxy maize and high amylose corn.

11. The product of Claim 10 wherein the starch has amylose content of at least 40% based on the weight of the starch.

12. The product of Claim 11 wherein the starch is modified with 2 to 15% by weight of alkylene oxide containing 2 to 6 carbon atoms and contains from 1 to 8% by weight of a nucleating agent.

13. A method of preparing an expanded structured biodegradable shaped product comprising extruding starch which has a particle size of from 400 to 1500 microns in the presence of a total moisture content of 25% or less by weight and at a temperature of from 100 to 250°C.

14. The method of Claim 13 wherein the starch is selected from the group consisting of corn, potato, wheat, tapioca, waxy maize and high amylose com and is modified with up to 15% by weight of alkylene oxide containing 2 to 6 carbon atoms.

15. The method of Claim 14 wherein the starch has at least 40% by weight of amylose content.

16. The method of Claim 14 wherein the product is a water dispersible shaped core product.

17. The method of Claim 15 wherein the starch has at least 65% by weight amylose content and has a particle size of from 800 to 1200 µm.

18. A rolled paper product comprising paper wound onto the starch core product of Claim 9.

19. A rolled paper product comprising paper wound onto the starch core product of Claim 12.

## Patentansprüche

1. Strukturiertes, biologisch abbaubares, geformtes Produkt, umfassend ein expandiertes, geschlossenzelliges Stärke-produkt, wobei das Produkt durch Extrudieren von Stärke gebildet ist, die eine Partikelgröße von 400 bis 1500 µm aufweist, wobei das Produkt eine Schüttdichte von 32,04 bis 256,3 kg/m³ (2 bis 16 lb/ft³), eine Komprimierbarkeit von 100 bis 800 g/cm² und eine Elastizität von mindestens 20% aufweist.

2. Produkt nach Anspruch 1, wobei die Stärke aus der Gruppe ausgewählt ist, die aus Mais, Kartoffel, Weizen, Tapioka, Wachsmais und Hochamylosemais besteht.

3. Produkt nach Anspruch 2, wobei die Stärke eine modifizierte Stärke ist.

4. Produkt nach Anspruch 1, wobei die Stärke einen Amylosegehalt von mindestens 40 Gew.-% aufweist, bezogen auf das Gewicht der Stärke.

5. Produkt nach Anspruch 1, wobei die Stärke 1 bis 8 Gew.-% eines Nukleierungsmittels enthält.

6. Produkt nach Anspruch 2, wobei die Stärke einen Amylosegehalt von mindestens 40 Gew.-%, bezogen auf das Gewicht der Stärke, aufweist und mit bis zu 15 Gew.-% 2 bis 6 Kohlenstoffatome enthaltendem Alkylenoxid modifiziert ist.

7. Produkt nach Anspruch 6, wobei das Produkt ein flexibles Blatt ist, und wobei die Stärke 2 bis 5 Gew.-% eines Nukleierungsmittels enthält.

8. Produkt nach Anspruch 6, wobei das Produkt ein steifes Brett ist und die Stärke 1 bis 3 Gew.-% eines Nukleierungsmittels enthält.

9. Produkt nach Anspruch 1, wobei das Produkt ein biologisch abbaubares, wasserdispergierbares, geformtes Kernprodukt ist.

10. Produkt nach Anspruch 9, wobei die Stärke aus der Gruppe ausgewählt ist, die aus Mais, Kartoffel, Weizen, Tapioka, Wachsmais und Hochamylosemais besteht.

11. Produkt nach Anspruch 10, wobei die Stärke einen Amylosegehalt von 40% enthält, bezogen auf das Gewicht der Stärke.

12. Produkt nach Anspruch 11, wobei die Stärke mit 2 bis 15 Gew.-% 2 bis 6 Kohlenstoffatome enthaltendem Alkylenoxid modifiziert ist und 1 bis 8 Gew.-% eines Nukleierungsmittels enthält.

13. Verfahren zum Herstellen eines expandierten strukturierten, biologisch abbaubaren, geformten Produkts, umfassend das Extrudieren von Stärke mit einer Partikelgröße von 400 bis 1500 µm in Gegenwart eines Gesamtfeuchtigkeitsgehalts von 25 Gew.-% oder weniger und bei einer Temperatur von 100 bis 250°C.

14. Verfahren nach Anspruch 13, wobei die Stärke aus der Gruppe ausgewählt ist, die aus Mais, Kartoffel, Weizen, Tapioka, Wachsmais und Hochamylosemais besteht, und mit bis zu 15 Gew.-% 2 bis 6 Kohlenstoffatome enthaltendem Alkylenoxid modifiziert ist.

15. Verfahren nach Anspruch 14, wobei die Stärke ein Amylosegehalt von mindestens 40 Gew.-% aufweist.

16. Verfahren nach Anspruch 14, wobei das Produkt ein wasserdispergierbares geformtes Kernprodukt ist.

17. Verfahren nach Anspruch 15, wobei die Stärke einen Amylosegehalt von mindestens 65 Gew.-% aufweist und eine Partikelgröße von 800 bis 1200 µm.

18. Gerolltes Papierprodukt, das um das Stärkekernprodukt nach Anspruch 9 gewickeltes Papier umfasst.

19. Gerolltes Papierprodukt, das um das Stärkekernprodukt nach Anspruch 12 gewickeltes Papier umfasst.

## Revendications

1. Produit façonné biodégradable structuré comprenant un produit consistant en amidon expansé à cellules closes, dans lequel le produit est formé en extrudant un amidon qui a un diamètre de particule de 400 à 1500 µm, le produit ayant une masse volumique apparente comprise dans l'intervalle de 32,04 à 256,3 kg/m³ (2 à 16 lb/ft³), une compressibilité de 100 à 800 g/cm² et une résilience d'au moins 20 %.

2. Produit suivant la revendication 1, dans lequel l'amidon est choisi dans le groupe consistant en l'amidon de maïs, la fécule de pomme de terre, l'amidon de blé et la fécule de manioc, l'amidon de maïs cireux et l'amidon de maïs à haute teneur en amylose.

3. Produit suivant la revendication 2, dans lequel l'amidon est un amidon modifié.

4. Produit suivant la revendication 1, dans lequel l'amidon a une teneur en amylose d'au moins 40 % en poids sur la base du poids de l'amidon.

5. Produit suivant la revendication 1, dans lequel l'amidon contient 1 à 8 % en poids d'un agent de nucléation.

6. Produit suivant la revendication 2, dans lequel l'amidon a une teneur en amylose d'au moins 40 % en poids sur la base du poids de l'amidon et est modifié avec une quantité allant jusqu'à 15 % en poids d'un oxyde d'alkylène contenant 2 à 6 atomes de carbone.

7. Produit suivant la revendication 6, qui consiste en une feuille flexible, dans lequel l'amidon contient 2 à 5 % en poids d'un agent de nucléation.

8. Produit suivant la revendication 6, qui consiste en une planche rigide, dans lequel l'amidon contient 1 à 3 % en poids d'un agent de nucléation.

9. Produit suivant la revendication 1, qui est un produit consistant en un noyau façonné biodégradable, dispersable dans l'eau.

10. Produit suivant la revendication 9, dans lequel l'amidon est choisi dans le groupe consistant en l'amidon de maïs, la fécule de pomme de terre, l'amidon de blé, la fécule de manioc, l'amidon de maïs cireux et l'amidon de maïs à haute teneur en amylose.

11. Produit suivant la revendication 10, dans lequel l'amidon a une teneur en amylose d'au moins 40 % sur la base du poids de l'amidon.

12. Produit suivant la revendication fil, dans lequel l'amidon est modifié, avec 2 à 15 % en poids d'un oxyde d'alkylène contenant 2 à 6 atomes de carbone, et contient 1 à 8 % en poids d'un agent de nucléation.

13. Procédé pour la préparation d'un produit façonné biodégradable structuré expansé, comprenant l'extrusion d'un amidon qui a un diamètre de particule de 400 à 1500 micromètres en présence d'une teneur totale en humidité égale ou inférieure à 25 % en poids et à une température comprise dans l'intervalle de 100 à 250°C.

14. Procédé suivant la revendication 13, dans lequel l'amidon est choisi dans le groupe consistant en l'amidon de maïs, la fécule de pomme de terre, l'amidon de blé, la fécule de manioc, l'amidon de maïs cireux et l'amidon de maïs à teneur en amylose et est modifié avec une quantité allant jusqu'à 15 % en poids d'un oxyde d'alkylène contenant 2 à 6 atomes de carbone.

15. Procédé suivant la revendication 14, dans lequel l'amidon a une teneur en amylose d'au moins 40 % en poids.

16. Procédé suivant la revendication 14, dans lequel le produit est un produit consistant en un noyau façonné dispersable dans l'eau.

17. Procédé suivant la revendication 15, dans lequel l'amidon a une teneur en amylose d'au moins 65 % en poids et a un diamètre de particule de 800 à 1200 µm.

18. Produit consistant en papier enroulé, comprenant un papier enroulé sur le produit consistant en noyau d'amidon de la revendication 9.

19. Produit consistant en papier enroulé comprenant un papier enroulé sur le produit consistant en noyau d'amidon de la revendication 12.
